# EUROPÄISCHE PATENTANMELDUNG

(11) **EP 4 446 668 A1**
(43) Veröffentlichungstag der Anmeldung: **16.10.2024**
(21) Anmeldenummer: 24168249.1
(22) Anmeldetag: 03.04.2024
(51) Int. Cl.: F24F 13/02, F24F 13/24, F16L 9/04, F16L 9/17, F16L 21/035

(54) **LÜFTUNGSKANALELEMENT, LÜFTUNGSKANAL UND VERFAHREN ZUM HERSTELLEN EINES LÜFTUNGSKANALELEMENTS**

(30) Priorität: 11.04.2023 DE 102023109054
(71) Anmelder: Witzenmann GmbH, 75175 Pforzheim (DE)
(72) Erfinder: Ehrenberger, David, 75203 Königsbach-Stein (DE); Leippi, Alexander, 75177 Pforzheim (DE)
(74) Vertreter: LBP Lemcke, Brommer & Partner Patentanwälte mbB

(57) **Zusammenfassung**

Vorgeschlagen wird ein Lüftungskanalelement (1) aus einem Blechmaterial, welches Blechmaterial zu einem umfänglich geschlossenen, rohrförmigen Körper umgeformt ist, welches Lüftungskanalelement (1) sich dadurch auskennzeichnet, dass das Blechmaterial als makrostrukturiertes Material, insbesondere als wölb- oder beulstrukturierte Blechtafel, ausgebildet ist und eine entsprechende Strukturierung (5) aufweist. Weiterhin vorgeschlagen werden ein aus solchen Lüftungskanalelement (1) zusammengesetzter Lüftungskanal und ein Verfahren zur Herstellung des Lüftungskanalelements (1).

## Beschreibung

Die Erfindung betrifft ein Lüftungskanalelement aus einem Blechmaterial, welches Blechmaterial zu einem umfänglich geschlossenen, rohrförmigen Körper umgeformt ist, nach dem Obergriff des Anspruchs 1.

Die Erfindung betrifft auch einen Lüftungskanal gemäß Anspruch 13 und Verfahren zum Herstellen eines Lüftungskanalelements gemäß Anspruch 17.

Lüftungskanäle, zum Beispiel zur Gebäudebelüftung und -Entlüftung, werden regelmäßig aus einzelnen Lüftungskanalelementen zusammengesetzt und sind bauraumbedingt bevorzugt rechteckig im Querschnitt ausgeführt. Um ausreichende Steifigkeit gegen Verbeulen zu gewährleisten und um unangenehme Resonanzschwingungen zu vermeiden, sind die vorbekannten Lüftungskanäle bzw. Lüftungskanalelemente entsprechend dickwandig ausgeführt.

Dies ist hinsichtlich der Materialkosten und der gewichtsbedingten Handhabung bei der Montage (über Kopf, im Deckenbereich) als nachteilig anzusehen.

Der Erfindung liegt die Aufgabe zugrunde, hier Abhilfe zu schaffen und ein Lüftungskanalelement, einen Lüftungskanal sowie ein Verfahren zur Herstellung eines Lüftungskanalelements anzugeben, das bzw. der im Hinblick auf Materialkosten und Gewicht vorteilhaft ist, indem das Gewicht und entsprechend der Materialaufwand gesenkt und die Kosten reduziert werden, ohne dass in diesem Zusammenhang unangenehme Resonanzschwingungen auftreten.

Diese Aufgabe wird erfindungsgemäß gelöst durch ein Lüftungskanalelement gemäß Anspruch 1, durch einen Lüftungskanal gemäß Anspruch 13 und durch ein Verfahren gemäß Anspruch 17.

Vorteilhafte Weiterbildungen sind in den jeweiligen Unteransprüchen definiert.

Erfindungsgemäß ist ein Lüftungskanalelement aus einem Blechmaterial, welches Blechmaterial zu einem umfänglich geschlossenen, rohrförmigen Körper umgeformt ist, dadurch gekennzeichnet, dass das Blechmaterial als makrostrukturiertes Material, insbesondere (vor der Umformung) als wölb- oder beulstrukturierte Blechtafel, ausgebildet ist und eine entsprechende Strukturierung aufweist.

Ein erfindungsgemäßer Lüftungskanal ist zusammengesetzt aus einer Mehrzahl von erfindungsgemäßen Lüftungskanalelementen.

Ein erfindungsgemäßes Verfahren zum Herstellen eines Lüftungskanalelements sieht vor, dass das Lüftungskanalelement aus makrostrukturiertem, vorzugsweise wölb- oder beulstrukturiertem Blech geformt wird, wozu höchst vorzugsweise
a) ein Blechmaterial zunächst makrostrukturiert, insbesondere wölb- oder beulstrukturiert wird;
b) das Blechmaterial anschließend zu einem erfindungsgemäßen Lüftungskanalelement umgeformt wird; und
c) optional das Blechmaterial gefalzt wird, insbesondere vor Schritt b), und durch Verfalzung oder Falzverbindung zu einer umfänglichen geschlossenen Struktur verbunden wird.

Wölb- oder beulstrukturierte bzw. allgemein makrostrukturierte Materialien sind dem Fachmann bekannt, beispielsweise aus der DE 10 2005 025 620 A1, die ein Verfahren zum Herstellen von makrostrukturierten Materialbahnen mit feinstrukturierten oder glatten Teilflächen, insbesondere von beulstrukturierten Blechtafeln mit ebenen Rändern für ein einfaches Fügen sowie für eine gute Planlage, beschreibt. Dabei wird die Materialbahn mit einer Makrostruktur, insbesondere Beulstruktur aus Falten und Mulden, versehen. Die Ränder der Materialbahn können eine Feinstrukturierung aus Wellen, auslaufenden Falten, kleineren Übergangsstrukturen und/oder eine Sicke und/oder eine glatte Gestalt erhalten.

Derartige Materialien werden insbesondere beim Karosseriebau von Bussen bzw. Schienenfahrzeugen eingesetzt: Für die Beplankung des Rahmens einer Karosserie verwendet man hierbei dünne Bleche aus Stahl oder Aluminium, die in der Regel durch thermisches Fügen mit einem Karosserierahmen verbunden werden. Insbesondere durch die thermischen Ausdehnungsbehinderungen des dünnen Materials können dabei unerwünschte Werkstoffspannungen und Wellungen, Verzüge oder der gefürchtete "Frosch" entstehen, was eine gute Planlage der Materialbahn verhindert (mit der Gefahr eines starken akustischen Dröhnens im späteren Fahrbetrieb). Die Verwendung der genannten wölb- oder beulstrukturierten Materialien soll diese Nachteile überwinden.

Die Anmelderin hat nun erkannt, dass sich die vorbekannten Materialien besonders vorteilhaft auch zur Herstellung von Lüftungskanalelementen nutzen lassen, die aus Kosten- und Montagegründen möglichst leicht und materialsparend sein sollen, dabei aber sicherstellen müssen, dass keine unangenehme Resonanzschwingungen auftreten. Dies lässt sich mit den genannten Materialien auf neuartige Weise erreichen.

Durch die Makrostrukturierung, speziell durch eine Beul- oder Wölbstrukturierung, kann/können Werkstoff und damit Gewicht sowie Kosten eingespart werden. Zugleich können das Aufschwingen und damit das Leiten sowie Abstrahlen von Körperschall reduziert werden.

Als grundlegende Neuerung wird also vorgeschlagen, Lüftungskanäle bzw. deren Einzelelemente aus makrostrukturiertem, speziell aus wölbstrukturiertem Blech zu formen. Vorzugsweise wird hierfür das Blech zunächst makrostrukturiert bzw. beul-/wölbstrukturiert und anschließend in einem Formkanal profiliert bzw. zu einem Lüftungskanalelement umgeformt und weiterhin optional gefalzt (zwecks Schaffung einer umfänglich geschlossenen Struktur durch Verfalzung/Falzverbindung). Um die Falzung zu erleichtern, kann vorgesehen sein, an den Rändern des Blechs auf eine Makro-/Wölbstrukturierung zu verzichten.

Eine spezielle Ausgestaltung der Erfindung sieht vor, dass das Blech nicht durchgängig wölbstrukturiert ist, um in entsprechend nicht strukturierten Bereichen oder Abschnitten Abzweige oder T-Stücke (für den Anschluss weiterer Lüftungskanalelemente) vereinfacht herstellen zu können.

Weiterhin ist im Zuge einer besonderen Ausgestaltung vorgesehen, die Strukturierung derart auszuführen, dass ein strömungsinduziertes Aufschwingen eines durch das Lüftungskanalelement geleiteten (Fluid- bzw. Luft-)Massenstroms und der Blechstruktur selbst (d.h. des Lüftungskanalelements selbst) unterbunden wird. Dies geschieht bevorzugt durch eine nicht-periodische Ausgestaltung der Strukturierung. So sind beispielsweise Autoreifennoppen in Umfangsrichtung nie periodisch, also sich regelmäßig wiederholend ausgebildet, um das entstehende Abrollgeräusch zu verringern)

Darüber hinaus kann die strukturierte Blechbahn bzw. das Blechmaterial vollflächig oder auch partiell (also teilflächig) mit einer schalldämpfenden Beschichtung versehen sein. Diese Beschichtung kann aus einer Fasermatte oder aus einem (Kunststoff-)Schaum, vorzugsweise einem offenporigen Schaum, insbesondere aus Kunststoff, ausgebildet werden.

Weiterhin kann vorgesehen sein, dass die Beschichtung mit antibakteriellen Eigenschaften ausgerüstet wird, um einer Verkeimung bei der Entstehung von Kondenswasser im Lüftungskanal entgegenzuwirken. Dafür können beispielsweise Silberionen in der Beschichtung eingesetzt werden.

In einer weiteren Ausgestaltung kann die Beschichtung auch in einem gefalzten Bereich aufgebracht werden, um denselben bzw. die Falzverbindung abzudichten.

Konkret haben sich folgende Ausgestaltungen der Erfindung als besonders vorteilhaft erwiesen:
Eine Ausgestaltung des erfindungsgemäßen Lüftungskanalelements ist gekennzeichnet durch wenigstens eine feinstrukturierte oder glatte Teilfläche. Eine solche Teilfläche weist eine geringere Strukturierung auf (in Bezug auf eine Stärke der Abweichung von einer glatten, d.h. unstrukturierten Oberfläche) als in Bereichen mit einer Makro-/Wölbstrukturierung.

Eine solche (glatte) Teilfläche erleichtert das Fügen mit weiteren Lüftungskanalelementen zwecks Schaffung eines zusammengesetzten Lüftungskanals und/oder das Ausbilden von Falzen.

Eine andere Ausgestaltung des erfindungsgemäßen Lüftungskanalelements sieht vor, dass die Teilfläche in wenigstens einem Randbereich des Blechmaterials oder in wenigstens einem offenen Endbereich des rohrförmigen Körpers angeordnet ist. Solche ebenen Ränder eignen sich besonders für ein einfaches Fügen sowie für eine gute Planlage.

Eine wieder andere Ausgestaltung des erfindungsgemäßen Lüftungskanalelements sieht vor, dass das Blechmaterial mit einer Makrostruktur, insbesondere Beul- oder Wölbstruktur aus Falten und Mulden, versehen ist.

Solche Strukturen haben sich als besonders gut geeignet erwiesen, um bei größtmöglicher Materialersparnis eine gute Stabilität zu gewährleisten.

Eine noch andere Ausgestaltung des erfindungsgemäßen Lüftungskanalelements sieht vor, dass wenigstens ein Randbereich des Blechmaterials eine Feinstrukturierung aus Wellen, auslaufenden Falten, kleineren Übergangsstrukturen und/oder eine Sicke und/oder eine glatte Gestalt aufweist.

Ein derartig strukturierter Randbereich kann in vorteilhafter Weise einerseits für eine (fluiddichte) Verbindung mit einen weiteren Lüftungskanalelement verwendet werden, andererseits jedoch auch für die bereits erwähnte Verfalzung zwecks Schaffung eines umfänglich geschlossenen (fluiddichten) (Kanal-)Struktur. Bevorzugt ist dabei eine Längeneinkürzung der Feinstrukturierung auf die Makrostrukturierung der Materialbahn angepasst.

Eine wieder andere Ausgestaltung des erfindungsgemäßen Lüftungskanalelements sieht vor, dass das Blechmaterial durch eine Verfalzung oder Falzverbindung umfänglich geschlossen ausgebildet ist.

Hierauf wurde bereits wiederholt hingewiesen. Beim Bau von Behältern und (Lüftungs-)Kanälen bieten Falzverbindungen bekanntermaßen den Vorteil, dass sie relativ luftdicht sind und sich gut gegen den Durchtritt von Flüssigkeiten abdichten lassen. Solche Falze lassen sich speziell in den glatten/feinstrukturierten Bereichen oder Teilflächen gut und prozesssicher ausbilden.

Falzverbindungen werden in vielen Bereichen der Technik eingesetzt und dabei regelmäßig maschinell hergestellt. Die am häufigsten eingesetzten Maschinen zum Herstellen von Falzen sind Falzformer, Bördelmaschinen und Kanalfalzmaschinen. Bekannte Falzverbindungen sind z.B. die Schnappfalz-Verbindung, die Kanalfalz-Verbindung oder die Pittsburghfalz-Verbindung, die auch vorliegend zum Einsatz kommen können.

Wieder eine andere Ausgestaltung des erfindungsgemäßen Lüftungskanalelements sieht vor, dass das Blechmaterial in vor der Umformung einander gegenüber liegenden Randbereichen jeweils einen Falz aufweist, vorzugsweise im Bereich einer genannten Teilfläche.

Auf diese Weise lässt sich anschließend leicht eine Verfalzung oder eine Falzverbindung, wie vorstehend erläutert, ausbilden, indem das Blech zu einem Kanal geformt und mit den dann aufeinandertreffenden Falzen verbunden wird.

Noch eine andere Ausgestaltung des erfindungsgemäßen Lüftungskanalelements sieht vor, dass im Bereich einer genannten Teilfläche ein Abzweig oder T-Stücke ausgebildet ist.

Eine derartige Ausbildung wird durch die spezielle Form der Teilfläche begünstigt, und es besteht anschließend die Möglichkeit, verzweigte oder komplexe Kanalstrukturen auszubilden.

Eine wieder andere Ausgestaltung des erfindungsgemäßen Lüftungskanalelements sieht vor, dass die Strukturierung derart ausgeführt ist, dass ein strömungsinduziertes Aufschwingen eines in dem Lüftungskanalelement geführten Fluid-Massenstroms (Luftstrom) und des Blechmaterials unterbunden ist. Bevorzugt wird dies durch das Vorsehen bzw. Ausbilden eines ein nicht-periodischen Strukturmusters erreicht.

Somit kommt es zu keinen Komfortbeeinträchtigungen bei der Verwendung des Lüftungskanalelements.

Um diesen Effekt noch zu verstärken, kann bei einer wieder anderen Ausgestaltung des erfindungsgemäßen Lüftungskanalelements vorgesehen sein, dass das strukturierte Blechmaterial vollflächig oder partiell mit einer vorzugsweise schalldämpfenden Beschichtung versehen bzw. überzogen ist, insbesondere auf einer Innenseite des Lüftungskanalelements.

Insbesondere kann in Weiterbildung dieser Idee vorgesehen sein, dass die Beschichtung aus einer (aufgeklebten) Fasermatte oder aus einem (aufgesprühten) Schaum, vorzugsweise einem offenporigen Schaum, höchst vorzugsweise einem Kunststoff-Schaum, gebildet ist.

Derartige Beschichtungen haben sich als besonders gut wirksam und einfach herzustellen erwiesen. Bevorzugte Materialien für die Beschichtung sind zum Einen Faservliese oder Dämmmatten, vorzugsweise aus einem anorganischen Werkstoff, höchst vorzugsweise Steinwolle oder Glasfaser, und zum Anderen Kunststoffschäume, vorzugsweise offenzellig.

Um einer Verkeimung bei der Entstehung von Kondenswasser entgegenzuwirken, kann in Weiterbildung des erfindungsgemäßen Lüftungskanalelements außerdem noch vorgesehen sein, dass die Beschichtung mit antibakteriellen Eigenschaften ausgerüstet ist. Dafür können insbesondere Silberionen in der Beschichtung enthalten sein.

In Weiterbildung des erfindungsgemäßen Lüftungskanalelements kann noch vorgesehen sein, dass die Beschichtung auch im Bereich des Falzes aufgebracht ist, um diesen gegen einen Fluidaustritt abzudichten.

Eine zugehörige Weiterbildung des erfindungsgemäßen Verfahrens beinhaltet, dass die Beschichtung vor dem Umformen in Schritt b) aufgebracht wird. Dies kann die Aufbringung der Beschichtung prozesstechnisch erleichtern. Es ist jedoch auch möglich, die Beschichtung erst nach der Umformung zu dem Lüftungskanalelement aufzubringen.

Wieder eine andere Ausgestaltung des erfindungsgemäßen Lüftungskanalelements sieht vor, dass in einem ersten, offenen Endbereich eine umlaufende Vertiefung, insbesondere zum Aufnehmen eines Dichtelements, ausgebildet ist.

Hierdurch lässt sich die Dichtigkeit eines zusammengesetzten Lüftungskanals gegenüber einem Fluidaustritt verbessern.

Noch eine andere Ausgestaltung des erfindungsgemäßen Lüftungskanalelements sieht vor, dass in einem zweiten, offenen Endbereich eine umlaufende Querschnittsaufweitung, insbesondere zum Übergreifen des Dichtelements, ausgebildet ist.

Auch hierdurch lässt sich die Dichtigkeit eines zusammengesetzten Lüftungskanals weiter verbessern. Außerdem erleichtert die genannte Querschnittsaufweitung das Einstecken eines weiteren Lüftungskanalelements.

Eine Weiterbildung des erfindungsgemäßen Lüftungskanals beinhaltet, dass die Lüftungskanalelemente paarweise in ihren offenen Endbereichen miteinander verbunden sind, vorzugsweise ineinandergesteckt.

Dies ermöglicht eine einfache Ausbildung des Lüftungskanals, insbesondere wenn die Lüftungskanalelemente (auf einer Seite) die genannte Querschnittsaufweitung aufweisen. Dann kann in Weiterbildung des Lüftungskanals ein Lüftungskanalelement mit seiner Querschnittsaufweitung ein anderes Lüftungskanalelement in einem Verbindungsabschnitt übergreifen.

Eine besonders vorteilhafte, weil fluiddichte Ausgestaltung des erfindungsgemäßen Lüftungskanals ergibt sich, wenn das eine Lüftungskanalelement das andere Lüftungskanalelement im Bereich von dessen Vertiefung übergreift und in der Vertiefung ein Dichtelement, insbesondere ein Dichtring, angeordnet ist.

Weitere Eigenschaften und Vorteile der Erfindung ergeben sich aus der nachfolgenden Beschreibung von Ausführungsbeispielen anhand der Zeichnung.
Figur 1a zeigt einen Querschnitt durch ein erfindungsgemäßes Lüftungskanalelement;
Figur 1b zeigt schematisch das Zusammenfügen zweier Lüftungskanalelement zu einem erfindungsgemäßen Lüftungskanal;
Figur 2 zeigt im Längsschnitt zwei miteinander verbundene erfindungsgemäße Lüftungskanalelemente; und
Figur 3 zeigt im Längsschnitt zwei andere miteinander verbundene erfindungsgemäße Lüftungskanalelemente.

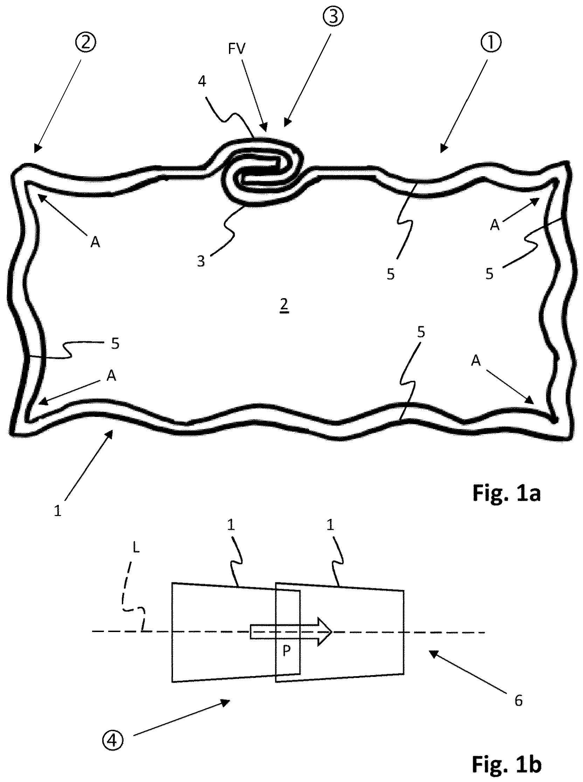

In der Figur 1a ist ein erfindungsgemäßes Lüftungskanalelement 1 im Querschnitt gezeigt. Das Lüftungskanalelement 1 ist gebildet aus einem Metallblech, vorzugsweise Edelstahl, das bei Bezugszeichen A jeweils um etwa 90 Grad abgewinkelt wurde, so dass sich eine umfänglich geschlossene, rechteckige Kanalstruktur ergibt. Im Inneren 2 des Kanals bzw. des Lüftungskanalelements 1 kann ein Fluid, insbesondere Luft, geleitet werden.

Bei Bezugszeichen 3 und 4 weist das Metallblech jeweils einen Falz auf, welche Falze 3, 4 vor dem Abwinkeln des Metallblechs demnach an einander gegenüberliegenden Rändern des Metallblechs verortet waren. Die Falze 3, 4 wirken in der gezeigten Weise durch Verhaken als Falzverbindung FV zusammen, um das Lüftungskanalelement 1 dauerhaft umfänglich zu schließen. Sie bewirken zudem eine ausreichende Fluiddichtigkeit.

Bei Bezugszeichen 5 weist das Metallblech bzw. das Lüftungskanalelement 1 eine Makrostrukturierung in Form von Beulen oder Wölbungen (Beul- oder Wölbstruktur) auf, wobei aus Gründen der Übersichtlichkeit nicht alle Beulen oder Wölbungen explizit bezeichnet sind. Hier und im Folgenden werden sowohl die einzelnen Wölbungen oder Beulen als auch die Makrostrukturierung/Makrostruktur an sich mit dem Bezugszeichen 5 bezeichnet. Solche (Makro-)Strukturierungen oder -Strukturen 5 sind an sich bekannt, und es kann diesbezüglich auf die Beschreibungseinleitung verwiesen werden.

Vorteilhafter Weise ist die (Makro-)Strukturierung 5 so ausgebildet, dass sich zumindest in Abschnitten, vorzugweise durchgängig, ein nicht-periodisches Strukturmuster, also insbesondere keine regelmäßige Abfolge der Beulen oder Wölbungen ergibt. Dadurch kann eine negative Geräuschentwicklung effizient vermieden werden.

Vorzugsweise wird bei der Herstellung des Lüftungskanalelements 1 zuerst das Blechmaterial strukturiert, d.h. mit der gezeigten Beul- oder Wölbstruktur bzw. Makrostrukturierung 5 versehen (z.B. wie in der DE 10 2005 025 620 A1 beschrieben; vgl. Bezugszeichen (D). Danach werden die Abwinkelungen vorgenommen (Bezugszeichen ②), und dann erfolgt die Falzverbindung (Bezugszeichen ③). Die Falze 3, 4 selbst werden vorzugsweise noch vor dem Abwinkeln in Schritt ② ausgebildet.

Bevorzugt weist das Blechmaterial bzw. das Lüftungskanalelement 1 im Bereich der Falze 3, 4 keine oder nur eine geringfügige (Fein-)Strukturierung auf, besitzt dort also eine feinstrukturierte oder glatte Teilfläche, wie im einleitenden Teil detailliert beschrieben. Eine solche Feinstrukturierung kann aus Wellen, auslaufenden Falten, kleineren Übergangsstrukturen und/oder einer Sicke und/oder einer glatten Oberfläche gebildet sein.

Die Art der Falze 3, 4 ist nicht auf die in Figur 1a gezeigte Formgebung beschränkt; auch andere Falztypen können Verwendung finden, wie einleitend beispielhaft beschrieben.

In der Figur 1b ist gezeigt, wie zwei erfindungsgemäße Lüftungskanalelemente 1, insbesondere gemäß Figur 1a, in Richtung ihrer jeweiligen Längsachse L (gestrichelt) gemäß dem Pfeil P zusammengefügt (insbesondere gesteckt) werden, um eine erfindungsgemäßen Lüftungskanal 6 zu bilden. Wie der Fachmann leicht erkennt, umfasst ein typischer Lüftungskanal 6 mehr als nur die exemplarisch gezeigten zwei Lüftungskanalelemente 1.

Die Lüftungskanalelemente 1 sind nicht auf einfache, gerade Formen beschränkt; auch gebogene, verzweigte oder andersartige geformte Lüftungskanalelemente liegen im Bereich der Erfindung. Entsprechend kann die Längsachse L auf einen anderen Verlauf aufweisen, der nicht auf eine Gerade beschränkt ist.

Bezugszeichen ④ gibt an, dass das Zusammenfügen der Lüftungskanalelemente 1 zu dem Lüftungskanal 6 bevorzugt den letzten Fertigungsschritt (①-④) darstellt.

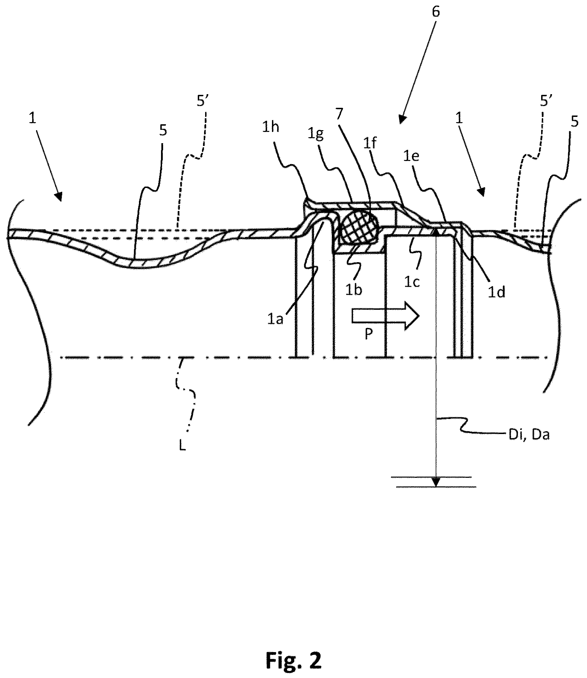

Figur 2 zeigt einen erfindungsgemäßen Lüftungskanal 6 mit mindestens zwei Lüftungskanalelementen 1 im Längsschnitt (entlang der Längsachse L). Gleiche Bezugszeichen bezeichnen in allen Figuren gleiche oder gleichwirkende Elemente.

Der gestrichelte Verlauf der Lüftungskanalelemente 1 bei Bezugszeichen 5' zeigt jeweils den Verlauf der Oberfläche des Lüftungskanalelements 1 außerhalb der Beulen oder Wölbungen 5 an.

Das links in Figur 2 gezeigte Lüftungskanalelement 1 weist an seinen gemäß dem Pfeil P in das rechts gezeigte Lüftungskanalelement 1 eingesteckten Ende (von links nach rechts) eine radial umlaufende Auswölbung 1a, eine radial umlaufende Nut oder Vertiefung 1b sowie ein glattzylindrisches Einführende 1c mit endständiger Einführschräge 1d auf. In der Vertiefung 1b ist ein Dichtelement in Form eines Dichtrings 7 angeordnet.

Das rechte Lüftungskanalelement 1 ist an seinem nicht gezeigten Ende entsprechend ausgebildet, weil bevorzugt alle (oder zumindest möglichst viele) Lüftungskanalelemente 1 Gleichteile sind.

Das rechts in Figur 2 gezeigte Lüftungskanalelement 1 weist an seinem das andere (eingesteckte) Lüftungskanalelement 1 übergreifenden (aufnehmenden) Ende, von rechts nach links, einen glattzylindrischen Bereich 1e mit gegenüber dem Einführende 1c leicht erweitertem Durchmesser, einen sich erweiternden Übergangsbereich 1f und einen weiteren glattzylindrischen Bereich 1g mit einem lichten Querschnitt auf, welcher lichte Querschnitt auf einen Außendurchmesser der Auswölbung 1a bzw. des Dichtrings 7 abgestimmt ist, um die Lüftungskanalelemente 1 fluiddicht gegeneinander abzudichten. Endständig ist eine Einführschräge 1h angeordnet. Der erweiterte (Innen-)Durchmesser Di im Bereich 1e entspricht bevorzugt passgenau einem Außendurchmesser Da im Bereich des Einführendes 1c.

Das linke Lüftungskanalelement 1 ist an seinem nicht gezeigten Ende entsprechend ausgebildet, weil bevorzugt alle (oder zumindest möglichst viele) Lüftungskanalelemente 1 Gleichteile sind.

Vorteilhafter Weise sind die vorstehend erläuterten Strukturen 1a-1h in Randbereichen der Lüftungskanalelemente 1 ausgebildet, die keine Makrostrukturierung mit Beulen oder Wölbungen 5 aufweisen und die entsprechend bevorzugt eine feinstrukturierte oder glatte Teilfläche darstellen.

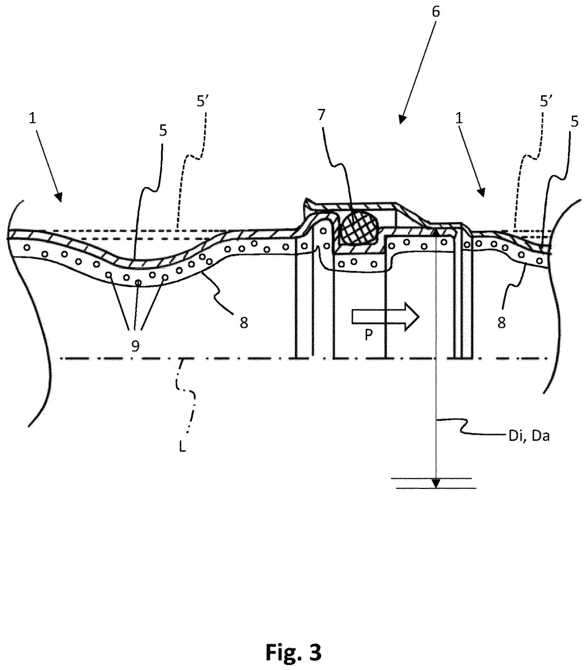

Figur 3 zeigt einen weiteren erfindungsgemäßen Lüftungskanal 6 mit mindestens zwei Lüftungskanalelementen 1 im Längsschnitt. Gleiche Bezugszeichen bezeichnen auch hier gleiche oder gleichwirkende Elemente.

Es wird im Folgenden nur auf die wesentlichen Unterschiede zum Gegenstand der Figur 2 näher eingegangen; aus Gründen der Übersichtlichkeit sind deshalb auch nicht alle Elemente in Figur 3 erneut bezeichnet (vgl. Figur 2).

Gemäß Figur 3 sind die Lüftungskanalelemente 1 innenseitig mit einer Beschichtung 8 versehen, die insbesondere aus einem offenporigen Schaummaterial, wie Kunststoffschaum, bestehen kann, das vor oder nach dem Ausbilden der Lüftungskanalelemente 1 auf das Blechmaterial aufgebracht (z.B. aufgesprüht) wird. Alternativ können auch Fasermatten oder dgl., insbesondere aus anorganischen Materialien, wie Glasfaser oder Steinwolle, zum Herstellen der Beschichtung 8 verwendet werden. Solche Fasermatten oder dgl. sind bevorzugt mit dem Blechmaterial der Lüftungskanalelemente 1 verklebt. Die Beschichtung 8 dient in erster Linie dazu, schalldämpfend zu wirken.

Anders als in der Abbildung gezeigt, kann die Beschichtung 8 auch in dem Überlappungsbereich der beiden Lüftungskanalelemente 1 an der Innenseite des jeweils äußeren der Lüftungskanalelemente 1 angebracht sein; dadurch kann (alternativ oder zusätzlich) zu der Dichtung (Dichtring) 7 eine fluiddichte Abdichtung zwischen den Lüftungskanalelementen 1 erreicht werden.

Gleiches gilt für die Ausgestaltung gemäß Figur 1, insbesondere die Falze 3, 4 bzw. die Falzverbindung FV, die entsprechend abgedichtet werden kann, wenn auch das dort gezeigte Lüftungskanalelement 1 mit einer bevorzugt innenseitigen Beschichtung versehen ist (dort nicht gezeigt).

Andererseits kann die in Figur 3 gezeigte Ausgestaltung ohne Beschichtung des äußeren Lüftungskanalelements 1 in dem Überlappungsbereich (Verbindungsabschnitt) ein Fügen des Lüftungskanals 6 erleichtern.

Um eine Verkeimung von Kondenswasser zu vermeiden, das sich in Inneren des Lüftungskanals 6 abscheiden kann, ist bevorzugt vorgesehen, dass die Beschichtung 8 antimikrobiell ausgerüstet ist. Dies kann z.B. durch die Einlagerung von Silberionen bewirkt werden, die in Figur 3 symbolisch bei Bezugszeichen 9 dargestellt sind. Dies gilt entsprechend auch für die Ausgestaltung gemäß Figur 1.

## Patentansprüche

1. Lüftungskanalelement (1) aus einem Blechmaterial, welches Blechmaterial zu einem umfänglich geschlossenen, rohrförmigen Körper umgeformt ist,
**dadurch gekennzeichnet, dass**
das Blechmaterial als makrostrukturiertes Material, insbesondere als wölb- oder beulstrukturierte Blechtafel, ausgebildet ist und eine entsprechende Strukturierung (5) aufweist.

2. Lüftungskanalelement (1) nach Anspruch 1,
**gekennzeichnet durch** wenigstens eine feinstrukturierte oder glatte Teilfläche, die vorzugsweise in wenigstens einem Randbereich des Blechmaterials oder in wenigstens einem offenen Endbereich des rohrförmigen Körpers angeordnet ist.

3. Lüftungskanalelement (1) nach einem der Ansprüche 1 oder 2,
bei dem das Blechmaterial mit einer Makrostruktur (5), insbesondere Beul- oder Wölbstruktur aus Falten und Mulden, versehen ist.

4. Lüftungskanalelement (1) nach einem der Ansprüche 1 bis 3,
bei dem wenigstens ein Randbereich des Blechmaterials eine Feinstrukturierung aus Wellen, auslaufenden Falten, kleineren Übergangsstrukturen und/oder eine Sicke und/oder eine glatte Gestalt aufweist.

5. Lüftungskanalelement (1) nach einem der Ansprüche 1 bis 4,
bei dem das Blechmaterial durch eine Verfalzung oder Falzverbindung (FV) umfänglich geschlossen ausgebildet ist.

6. Lüftungskanalelement (1) nach einem der Ansprüche 1 bis 5,
bei dem das Blechmaterial in vor der Umformung einander gegenüber liegenden Randbereichen einen Falz (3, 4) aufweist, vorzugsweise im Bereich einer Teilfläche nach Anspruch 2.

7. Lüftungskanalelement (1) nach einem der Ansprüche 1 bis 6,
bei dem die Strukturierung (5) derart ausgeführt ist, dass ein strömungsinduziertes Aufschwingen eines in dem Lüftungskanalelement (1) geführten Fluid-Massenstroms und des Blechmaterials unterbunden ist.

8. Lüftungskanalelement (1) nach einem der Ansprüche 1 bis 7,
bei dem die Strukturierung (5) derart ausgeführt ist, dass zumindest abschnittweise ein nicht-periodisches Strukturmuster ausgebildet ist.

9. Lüftungskanalelement (1) nach einem der Ansprüche 1 bis 8,
bei dem das strukturierte Blechmaterial vollflächig oder partiell mit einer vorzugsweise schalldämpfenden Beschichtung (8) versehen ist, welche Beschichtung (8) vorzugsweise aus einer Fasermatte, vorzugsweise aus einem Schaum, insbesondere einem offenporigen Schaum, höchst vorzugsweise einem Kunststoff-Schaum, gebildet ist und/oder vorzugsweise mit antibakteriellen Eigenschaften ausgerüstet ist, indem insbesondere Silberionen (9) in der Beschichtung (8) enthalten sind.

10. Lüftungskanalelement (1) nach den Ansprüchen 6 und 9,
bei dem die Beschichtung (8) auch im Bereich des Falzes (3, 4) aufgebracht ist.

11. Lüftungskanalelement (1) nach einem der Ansprüche 1 bis 10,
bei dem in einem ersten, offenen Endbereich eine umlaufende Vertiefung (1b), insbesondere zum Aufnehmen eines Dichtelements (7), ausgebildet ist.

12. Lüftungskanalelement (1) nach einem der Ansprüche 1 bis 11,
bei dem in einem zweiten, offenen Endbereich eine umlaufende Querschnittsaufweitung (1g), insbesondere zum Übergreifen des Dichtelements (7) gemäß Anspruch 15, ausgebildet ist.

13. Lüftungskanal (6), zusammengesetzt aus einer Mehrzahl von Lüftungskanalelementen (1) nach einem der vorhergehenden Ansprüche.

14. Lüftungskanal (6) nach Anspruch 13, bei dem
die Lüftungskanalelemente (1) paarweise in ihren offenen Endbereichen miteinander verbunden sind, vorzugsweise ineinandergesteckt.

15. Lüftungskanal (6) nach Anspruch 13 oder 14 bei Rückbezug auf Anspruch 12,
bei dem ein Lüftungskanalelement (1) mit seiner Querschnittsaufweitung (1g) ein anderes Lüftungskanalelement (1) in einem Verbindungsabschnitt übergreift.

16. Lüftungskanal (6) nach Anspruch 15 bei Rückbezug auf Anspruch 11,
bei dem das eine Lüftungskanalelement (1) das andere Lüftungskanalelement (1) im Bereich von dessen Vertiefung (1b) übergreift und in der Vertiefung (1b) ein Dichtelement, insbesondere ein Dichtring (7), angeordnet ist.

17. Verfahren zum Herstellen eines Lüftungskanalelements (1), bei dem das Lüftungskanalelement (1) aus makrostrukturiertem, vorzugsweise wölbstrukturiertem Blech geformt wird, wozu höchst vorzugsweise
a) ein Blechmaterial zunächst makrostrukturiert, insbesondere wölbstrukturiert wird;
b) das Blechmaterial anschließend zu einem Lüftungskanalelement (1) umgeformt wird, insbesondere zu einem Lüftungskanalelement (1) nach einem der Ansprüche 1 bis 16; und
c) optional das Blechmaterial gefalzt wird, insbesondere vor Schritt b), und durch Verfalzung oder Falzverbindung (FV) zu einer umfänglichen geschlossenen Struktur verbunden wird.

18. Verfahren nach Anspruch 17 zur Herstellung eines Lüftungskanalelements (1) nach einem der Ansprüche 9 oder 10, bei dem
die Beschichtung (8) vor dem Umformen in Schritt b) aufgebracht wird.
